Europäisches Patentamt

European Patent Office

Office européen des brevets

(19)

(11) Veröffentlichungsnummer: **0 085 272**
**B1**

# (12) EUROPÄISCHE PATENTSCHRIFT

(45) Veröffentlichungstag der Patentschrift:
**31.07.85**

(51) Int. Cl.⁴: **B 60 K 17/10**

(21) Anmeldenummer: **82710003.3**

(22) Anmeldetag: **30.01.82**

(54) **Hydrostatischer Fahrantrieb mit Abschleppschaltung.**

(43) Veröffentlichungstag der Anmeldung:
**10.08.83 Patentblatt 83/32**

(45) Bekanntmachung des Hinweises auf die Patenterteilung:
**31.07.85 Patentblatt 85/31**

(84) Benannte Vertragsstaaten:
**DE FR IT SE**

(56) Entgegenhaltungen:
**DE - A - 2 131 387**
**DE - A - 2 947 552**
**DE - B - 1 224 622**
**FR - A - 2 416 812**

(73) Patentinhaber: **LOSENHAUSEN Maschinenbau AG,
Schlüterstrasse 13-19, D-4000 Düsseldorf (DE)**

(72) Erfinder: **Scheurenberg, Helmut, Erfurter Strasse 9,
D-4030 Ratingen (DE)**
Erfinder: **Funke, Manfred, Feldblick 24,
D-4030 Ratingen 2 (DE)**

## Beschreibung

Die Erfindung betrifft einen hydrostastischen Fahrantrieb für Fahrzeuge enthaltend

(a) eine von einer Antriebskraftmaschine antreibbare hydraulische Verstellpumpe mit einem ersten und einem zweiten Anschluß,

(b) wenigstens einen hydraulischen Fahrmotor mit einem ersten und einem zweiten Anschluß,

(c) hydraulische Verbindungsleitungen, durch welche der erste Anschluß der Verstellpumpe mit dem ersten Anschluß des Fahrmotors und der zweite Anschluß der Verstellpumpe mit dem zweiten Anschluß des Fahrmotors verbunden ist, so daß von der Verstellpumpe, dem Fahrmotor und den Verbindungsleitungen ein Hydraulikkreis gebildet wird und die Verstellpumpe und der Fahrmotor ein hydraulisches Verstellgetriebe zur Übertragung der Antriebsleistung von der Antriebskraftmaschine auf Antriebsglieder des Fahrzeugs bilden,

(d) einen Druckmittelvorratsbehälter,

(e) eine zusammen mit der Verstellpumpe antreibbare Füllpumpe, mit einem Einlaßanschluß, der mit dem Druckmittelvorratsbehälter in Verbindung steht, und einem Auslaßanschluß,

(f) Mittel zur Verbindung des Auslaßanschlusses der Füllpumpe mit dem Hydraulikkreis,

(g) eine auf die Antriebsglieder wirkende Feststellbremse, die durch Druckmitteldruck lösbar ist und bei Wegfall dieses Druckmitteldrucks einfällt,

(h) eine Bremsleitung zwischen dem Auslaßanschluß der Füllpumpe und der Feststellbremse,

(i) ein in der Bremsleitung angeordnetes Bremsventil mit einer ersten und einer zweiten Schaltstellung, das

($i_1$) in seiner ersten Schaltstellung die Bremsleitung freigibt, so daß die Feststellbremse durch Druck der Füllpumpe lösbar ist, und

($i_2$) in seiner zweiten Schaltstellung die Bremsleitung absperrt und die Feststellbremse mit dem Druckmittelvorratsbehälter verbindet, so daß die Feststellbremse einfällt, und

(j) Mittel zum Erzeugen eines Druckmitteldrucks an der Feststellbremse unabhängig von der Füllpumpe, so daß bei Stillstand der Antriebskraftmaschine und Wegfall des Drucks der Füllpumpe ein Lösen der Feststellbremse beim Abschleppen des Fahrzeugs möglich ist.

Bekannte hydrostatische Fahrantriebe dieser Art z. B. für Straßenbaumaschinen enthalten einen Dieselmotor als Antriebskraftmaschine. Eine zusammen mit der Verstellpumpe von der Antriebskraftmaschine angetriebene Füllpumpe versorgt den Hydraulikkreis des hydrostatischen Fahrantriebs mit dem notwendigen Druckmitteldruck. Neben der Betriebsbremse der Straßenbaumaschine ist eine davon unabhängige Feststellbremse vorgesehen, die bei Ausfall des Druckmittels einfällt und durch den von der Füllpumpe aufgebrachten Bremsluftdruck gelöst wird.

Es ist weiter bekannt, eine hydraulische Lenkhilfe vorzusehen, durch die die Lenkung von schweren Fahrzeugen wie Straßenbaumaschinen hydraulisch erleichtert wird.

Es ist weiterhin bekannt, die Antriebsräder z. B. eines Walzenzuges mit einer Differentialsperre zu versehen, die hydraulisch gelöst wird. Die Differentialsperre ist an die von der Füllpumpe ausgehende Versorgungsleitung angeschlossen und weist ein in der Versorgungsleitung angeordnetes Schaltventil mit einem im Zündstromkreis liegenden elektrischen Tasten auf, in dessen erster Schaltstellung die Füllpumpe und in dessen zweiter Schaltstellung vorübergehend der Druckmittelvorratsbehälter mit der Differentialsperre verbunden ist. Durch diesen nur vorübergehend betätigbaren Taster wird die Differentialwirkung an den Antriebsrädern aufgehoben, wenn die besonderen Vortriebsbedingungen des Walzenzuges dies erfordern.

Bei einem solchen Fahrantrieb ist ein Wegfall des Druckmitteldrucks z. B. durch Ausfall der Antriebskraftmaschine automatisch mit dem Anziehen der Feststellbremse verbunden. Es wäre dann nicht möglich, das Fahrzeug abzuschleppen.

Durch die DE-A1-2 947 442 ist daher eine Anordnung der vorliegenden Art bekannt, bei welcher in einem solchen Fall mittels einer Handpumpe Druckmitteldruck zum Lüften der Feststellbremse auf die Feststellbremse gegeben werden kann. Durch Leckage tritt jedoch bei solchen Abschleppeinrichtungen schon bald ein Druckabfall ein, der zu einem schleifenden Einfall der Feststellbremse führt. Es muß dann der Lüftdruck erneut aufgegeben werden.

Die FR-A1-2 416 812 zeigt einen hydraulischen Fahrantrieb der vorliegenden Art mit einer bei Wegfall des Druckmitteldrucks einfallenden Feststellbremse, bei welchem ebenfalls ein Abschleppen bei Ausfall der Antriebskraftmaschine möglich ist. Bei dieser Anordnung werden durch ein Abschleppventil die beiden Anschlüsse des Fahrmotors miteinander verbunden, so daß sich der Fahrmotor frei drehen kann. Druckmitteldruck an der Feststellbremse wird mittels einer handbetätigten Pumpe erzeugt. Als solche dient eine mit dem Hydraulikkreis verbundene Kolben-Zylindereinheit, die bei Normalbetrieb zur Verstellung der Antriebskraftmaschine dient.

In der DE-A-2 131 387 ist eine Servoeinrichtung für Kraftfahrzeuge mit einer Betätigungseinrichtung für das Getriebe oder Kraftverstärkungseinrichtung für die Lenkung und die Bremsen beschrieben, bei der die Druckmittelversorgung der Servovorrichtung durch eine von der Antriebskraftmaschine angetriebene Hilfspumpe erfolgt. Bei einem Druckabfall in der Druckmittelleitung dieser Hilfspumpe wird die Servoeinrichtung mit einer von den Antriebsrädern des Fahrzeugs antreibbaren Zusatzpumpe verbunden.

Der Erfindung liegt die Aufgabe zugrunde, bei einem hydrostatischen Fahrantrieb der eingangs definierten Art bei Ausfall der Antriebskraftmaschine auf bequeme Weise ein Lüften der Feststellbremse zum Abschleppen des Fahrzeugs zu ermöglichen, ohne daß die Feststellbremse nach einiger Zeit wieder einfällt.

Erfindungsgemäß wird diese Aufgabe dadurch gelöst, daß

(k) als Mittel zum Erzeugen eines Druckmitteldrucks an der Feststellbremse eine zu dem hydraulischen Fahrmotor über Anschlußleitungen parallel angeordnete Abschleppschaltung vorgesehen ist, welche

(k₁) eine Absperrventilanordnung zum Trennen der Abschleppschaltung von den Anschlüssen des Fahrmotors enthält sowie

(k₂) einen zwischen den Anschlüssen des Fahrmotors sich erstreckenden Hydraulikkreis mit druckbegrenzenden Mitteln, die einen Einlaß- und Auslaßanschluß und

(k₃) eine Verbindung zwischen einem Anschluß des Fahrmotors und der Feststellbremse derart, daß ein beim Abschleppen des Fahrzeugs an dem Anschluß des Fahrmotors vor den druckbegrenzenden Mitteln durch den dann als Pumpe wirkenden Fahrmotor erzeugter Druckmitteldruck ein Lösen der Feststellbremse bewirkt.

Die erfindungsgemäße Abschleppschaltung baut auf der Eigenschaft des Fahrmotors auf, beim Umlauf der mit diesem in Antriebsverbindung stehenden Räder als Pumpe zu arbeiten, so daß an einem der Anschlüsse des Fahrmotors vor den druckbegrenzenden Mitteln ein hydrostatischer Druck aufgebaut wird. Es ist über die druckbegrenzenden Mittel ein geschlossener Hydraulikkreis vorhanden, so daß nach Erreichen eines Mindestdrucks, der zum Lüften der Feststellbremse ausreicht, die Drehbewegung des Fahrmotors beim Abschleppen nicht blockiert wird. Diese hydrostatische Druck wird in geöffneter Stellung der Absperrventilanordnung über die Anschlußleitungen auf die Versorgungsleitung und die Bremsleitung, gegebenenfalls auch auf die Lenkhilfe und die Leitung zur Differentialsperre, gegeben und reicht aus, um diese Komponenten des hydrostatischen Fahrantriebs mit dem jeweils erforderlichen Hilfsdruck zu versehen. Im normalen Fahrbetrieb sind die Anschlußleitungen in geschlossener Stellung der Absperrventilanordnung gegen den Fahrmotor gesperrt.

Vorteilhafte Ausgestaltungen der erfindungsgemäßen Abschleppschaltung sind in Unteransprüchen gekennzeichnet.

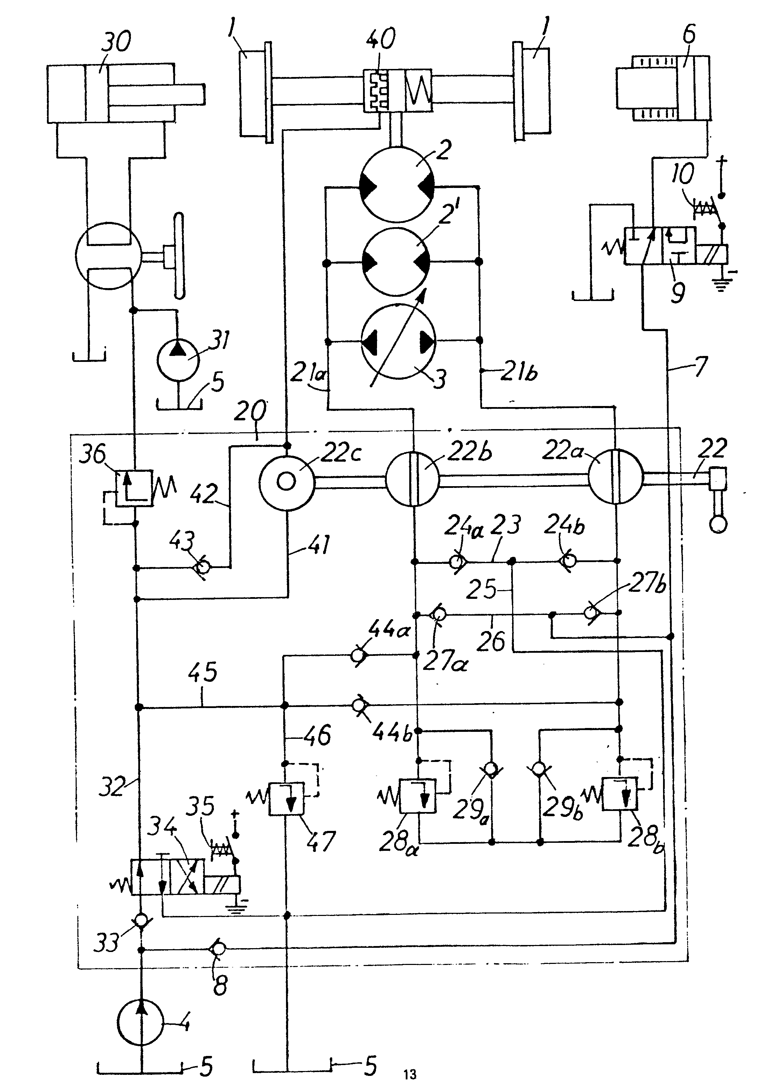

Ein Ausführungsbeispiel der Erfindung ist nachstehend unter Bezugnahme auf die Zeichnung näher erläutert. Die Abbildung zeigt ein vereinfachtes Schaltschema eines hydrostatischen Fahrantriebs mit einer Abschleppschaltung.

Nachfolgend werden der Aufbau und die Funktion der Abschleppschaltung beispielhaft unter Bezugnahme auf einen damit ausgerüsteten Walzenzug beschrieben. In dem Schaltschema der Abbildung ist der hydrostatische Fahrantrieb ohne die Antriebskraftmaschine, die z. B. ein Dieselmotor ist, dargestellt. Diese Antriebskraftmaschine wird mittels eines mit Zündschloß versehenen Anlaßstromkreises gestartet, in dem eine Batterie liegt.

Mit 1 sind Räder eines Walzenzuges bezeichnet, die mit einem Fahrmotor 2 verbunden sind. Der Fahrmotor hat einen ersten und einen zweiten Anschluß. Eine hydraulische Verstellpumpe 3 ist von einer (nicht dargestellten) Antriebskraftmaschine in bekannter Weise antreibbar. Die Verstellpumpe 3 hat einen ersten und einen zweiten Anschluß. Durch hydraulische Verbindungsleitungen ist der erste Anschluß der Verstellpumpe 3 mit dem ersten Anschluß des Fahrmotors 2 und der zweite Anschluß der Verstellpumpe 3 mit dem zweiten Anschluß des Fahrmotors verbunden. Auf diese Weise wird von der Verstellpumpe 3, dem Fahrmotor 2 und den Verbindungsleitungen ein Hydraulikkreis gebildet. Die Verstellpumpe und der Fahrmotor bilden ein hydraulisches Verstellgetriebe zur Übertragung der Antriebsleistung von der Antriebskraftmaschine auf die Räder 1 des Walzenfahrzeugs. Bei der dargestellten bevorzugten Ausführungsform ist ein weiterer Fahrmotor 2' für den Walzkörper des Walzenzuges vorgesehen, der parallel zu dem Fahrmotor 2 liegt und mit diesem von der Verstellpumpe 3 gespeist wird.

Zusammen mit der Verstellpumpe 3 wird durch die Antriebskraftmaschine eine Füllpumpe 4 mit einem Einlaßanschluß und einem Auslaßanschluß angetrieben. Dieser Einlaßanschluß steht mit einem Druckmittelvorratsbehälter 5 in Verbindung. Der Auslaßanschluß ist durch (nicht dargestellte) Mittel mit dem der von der Verstellpumpe 3 und dem Fahrmotor 2 gebildeten Hydraulikkreis verbunden. Auf diese Weise versorgt die Füllpumpe das System mit Druckmittel.

Auf die Räder 1 wirkt eine Feststellbremse 6, die durch Druckmitteldruck lösbar ist und bei Wegfall dieses Druckmitteldrucks einfällt und die Räder 1 abbremst. Die Feststellbremse 6 ist durch eine Bremsleitung 7 über ein Rückschlagventil 8 an die Füllpumpe 4 angeschlossen. In der Bremsleitung 7 liegt ein Bremsventil 9, daß als ³/₂-Wegeventil ausgebildet ist. In der dargestellten ersten Schaltstellung verbindet das Bremsventil 9 die Feststellbremse 6 mit der Füllpumpe, so daß die Feststellbremse 6 unter der Wirkung des Druckmitteldrucks von der Füllpumpe 4 gelöst ist. Bei Stillstand der Antriebskraftmaschine steht die Füllpumpe 4. Das Rückschalgventil 8 verhindert jedoch einen Abfall des Druckmitteldrucks an der Feststellbremse 6. Das Bremsventil 9 ist mit einem direkt an die Batterie des Anlaßstromkreises angeschlossenen Taster 10 verbunden. Bei Betätigung des Tasters 10 wird das Bremsventil 9 vorübergehend in eine zweite Schaltstellung gebracht. In dieser Schaltstellung ist die Feststellbremse 6 mit dem Druckmittelvorratsbehälter 5 verbunden, so daß der Druckmitteldruck an der Feststellbremse 6 abfällt und die Feststellbremse 6 zum Einfallen gebracht wird.

Um ein Lösen der Feststellbremse 6 und damit ein Abschleppen des Fahrzeugs bei Ausfall der Antriebskraftmaschine zu ermöglichen, sind Mittel zum Erzeugen des Druckmitteldrucks an der Feststellbremse unabhängig von der Füllpumpe 4 vorgesehen. Diese Mittel zum erzeugen eines Druckmitteldrucks an der Feststellbremse enthalten eine Abschleppschaltung 20, die in der Figur eingerahmt dargestellt ist. Die Abschleppschaltung 20 weist zwei Anschlußleitungen 21a und 21b auf, die von den Anschlüssen des Fahrmotors 2 (und von den Anschlüssen des Fahrmotors 2' für den Walzenkörper) ausgehen. Die Anschlußleitungen 21a, 21b sind durch eine handbetätigte Absperrventilanordnung 22 absperrbar. Dadurch kann die Abschleppschaltung 20 von den Anschlüssen des Fahrmotors 2 mittels der Absperrventilanordnung 22 getrennt werden. Die Absperrventilanordnung 22 enthält zwei gemeinsam betätigbare Ventile 22a, 22b die jeweils in einer der Anschlußleitungen 21a bzw. 21b angeordnet sind. In der Figur sind die Ventile 22a, 22b in geöffneter Stellung gezeigt. Die Abschleppschaltung 20 enthält einen zwischen den Anschlüssen des Fahrmotors 2 sich erstreckenden Hydraulikkreis mit druckbegrenzenden Mitteln, z. B. 28a, die einen Einlaß- und einen Auslaßanschluß aufweisen. Weiterhin enthält die Abschleppschaltung 20 eine Verbindung zwischen einem Anschluß des Fahrmotors 2 und der Feststellbremse 6, derart, daß ein beim Abschleppen des Fahrzeugs an dem Anschluß des Fahrzeugmotors 2 vor den druckbegrenzenden Mitteln durch den dann als Pumpe wirkenden Fahrmotor 2 erzeugter Druckmitteldruck ein Lösen der Feststellbremse bewirkt. Nimmt man einmal an, daß das Abschleppen in einer solchen Richtung erfolgt, daß der als Pumpe wirkende Fahrmotor 2 Druckmittel durch den in der Figur linken Anschluß ansaugt und über den in der Figur rechten Anschluß abgibt, so wird dieses Druckmittel bei geöffneten Ventilen 22a und 22b zunächst durch die druckbegrenzten Mitteln 22a am Umlauf gehindert, bis ein bestimmter Mindestdruck erreicht ist. Bei diesem Mindestdruck öffnen die druckbegrenzenden Mittel 28a, so daß ein Umlauf in dem Hydraulikkreis stattfindet. Der Öffnungsdruck der druckbegrenzenden Mittel 28a ist so hoch, daß er zum Lüften der Feststellbremse 6 ausreicht. Dieser Druck wird über eine Verbindung mit einem Rückschlagventil 27a, einer Leitung 26 und einem Teil der Bremsleitung 7 auf die Feststellbremse 6 geschaltet, so daß diese gelöst wird. Die Abschleppschaltung 20 enthält weiterhin eine Verbindung über eine Leitung 25 und ein Rückschlagventil 24 zwischen dem anderen, in der Figur linken Anschluß des Fahrmotors 2 und dem Druckmittelvorratsbehälter 5 unter Umgehung der Füllpumpe 4. Auf diese Weise kann der als Pumpe wirkende Fahrmotor Druckmittel aus dem Druckmittelvorratsbehälter 5 ansaugen, wenn in dem geschlossenen Hydraulikkreis Druckmittel durch Leckage verloren geht.

Die bevorzugte Ausführungsform ist so ausgebildet, daß ein Abschleppen in beiden Richtungen möglich ist, die Feststellbremse 6 also gelöst wird gleichgültig ob beim Abschleppen der Fahrmotor 2 in der einen oder in der anderen Richtung gedreht wird und dementsprechend der Druck an dem linken oder dem rechten Anschluß entsteht.

Zu diesem Zweck enthält die Anschleppschaltung 20 ein erstes Paar von Rückschlagventilen 24a und 24b, die zwischen je einer der Anschlußleitungen 21a bzw. 21b und einer zum Druckmittelvorratsbehälter 5 geführten Leitung 25 angeordnet sind. Jedes der Rückschlagventile 24a und 24b öffnet in Richtung von dem Druckmittelvorratsbehälter zu der zugehörigen Anschlußleitung 21a und 21b hin. Weiterhin enthält die Abschleppschaltung 20 ein zweites Paar von Rückschlagventilen 27a und 27b, die zwischen je einer der Anschlußleitungen 21a bzw. 21b und der zur Bremsleitung 7 führenden Leitung 26 angeordnet ist. Jedes der Rückschlagventile 27a und 27b öffnet in Richtung von der zugehörigen Anschlußleitung 21a bzw. 21b zu der Bremsleitung 7 hin. Die Abschleppschaltung 20 enthält als druckbegrenzende Mittel weiterhin zwei Druckbegrenzer 28a und 28b mit je einem Einlaßanschluß und einem Auslaßanschluß. Die Einlaßanschlüsse der Druckbegrenzer 28a und 28b sind mit je einer der Anschlußleitungen 21a bzw. 21b verbunden. Der Auslaßanschluß des Druckbegrenzers 28a, 28b dessen Einlaßanschluß mit einer Anschlußleitung 21a bzw. 21b verbunden ist, steht über ein Rückschlagventil 29a bzw. 29b mit der jeweils anderen Anschlußleitung 21b bzw. 21a in Verbindung. Das Rückschlagventil 29a öffnet in Richtung auf die Anschlußleitung 21b hin. Das Rückschlagventil 29b öffnet in Richtung auf die Anschlußleitung 21a hin.

Wenn die Drehrichtung des Fahrmotors 2 beim Abschleppen so ist, daß der Fahrmotor 2 Druckmittel über ein in der Figur linken Anschluß ansaugt und Druckmittel über den in der Figur rechten Anschluß abgibt, so ergibt sich ein Druckmittelkreislauf von dem rechten Anschluß des Fahrmotors 2 über die Anschlußleitung 21a, den Druckbegrenzer 28a, das Rückschlagventil 29a und die Anschlußleitung 21b zum linken Anschluß des Fahrmotors 2. Das Rückschlagventil 29b ist geschlossen. Der Druckbegrenzer 28b ist durch das Rückschlagventil 29a überbrückt. Es entsteht also ein geschlossener Kreislauf, so daß die Drehbewegung des Fahrmotors 2 beim Abschleppen nicht blockiert ist. Der Druckbegrenzer 28a sorgt jedoch dafür, daß sich in der Anschlußleitung 21a vor dem Druckbegrenzer 28a ein Druck aufbaut, der zum Lösen der Feststellbremse 6 ausreicht. Dieser Druck wird über das Rückschlagventil 27a und Leitung 26 auf die Bremsleitung 7 übertragen. Druckmittelverluste in diesem Hydraulikkreis durch Leckage können dadurch ausgeglichen werden, daß der Fahrmotor 2 über Leitung 25, Rückschlagventil 24 und die Anschlußleitung 21b Druckmittel aus dem Druckmittelvorratsbehälter 5 ansaugt. Wenn dagegen der Fahrmotor 2 in entgegengesetzter Richtung angetrieben wird, dann baut sich in der Anschlußleitung 21b vor dem Druckminderer 28b ein Druck auf, der über das Rückschlagventil 27b und Leitung 26 auf die Bremsleitung 7 und die Feststellbremse 6 gegeben wird. In diesem Fall kann eine Ansaugung von Druckmittel über Leitung 25 und Rückschlagventil 24a in die Anschlußleitung 21a erfolgen.

Im Normalbetrieb erhält die Feststellbremse 6 Druckmittel von der Füllpumpe 4 über das Rückschlagventil 8, das in Richtung auf die Bremsleitung 7 und die Feststellbremse 6 hin öffnet. Wenn die Antriebskraftmaschine ausfällt und damit auch die Füllpumpe 4 kein Druckmittel fördert, so wird beim Abschleppen, wie geschildert, der Druckmitteldruck an der Feststellbremse 6 über die Leitung 26 und die Bremsleitung 7 zugeführt. In diesem Fall sperrt das Rückschlagventil 8 die Bremsleitung zur Füllpumpe 4 hin ab. Im Normalbetrieb ist die Absperrventilanordnung 22 in einer Stellung, in welcher die beiden Ventile 22a und 22b geschlossen sind. In diesem Falle hat die Abschleppschaltung 20 keinerlei Einfluß auf die Funktion des hydrostatischen Fahrantriebs. Zum Abschleppen wird die Absperrventilanordnung 22 von Hand in die dargestellten Lage umgeschaltet.

Der Abschleppvorgang erfolgt bei der beschriebenen Anordnung zwar gegen die eingefallene Feststellbremse 6. Es genügt aber bereits eine geringfügige Drehung des Walzkörpers und der Räder 1, um einen zur Lösung der Feststellbremse ausreichenden Druckmitteldruck zu erzeugen. Am Ende des Abschleppvorgangs wird die Absperrventilanordnung in ihre Sperrstellung gebracht, in welcher die Anschlußleitungen 21 durch die Ventile 22a und 22b gegen die Fahrmotoren 2 und 2' abgesperrt sind. Der Druckmitteldruck in der Bremsleitung 7 bleibt dabei bestehen, da die Bremsleitung 7 durch die Rückschlagventile 8 sowie 27a und 27b abgesperrt ist. Die Feststellbremse 6 kann aber am Ende des Abschleppvorgangs durch Betätigung des an die Batterie angeschlossene Taste 10 wieder zum Einfallen gebracht werden.

Bei dem in der Figur dargestellten Ausführungsbeispiel sind zusätzlich zu der Feststellbremse 6 eine Lenkhilfe 30 und eine Differentialsperre 40 vorgesehen. Im Betrieb des Walzenzuges wird die Lenkhilfe 30 durch eine Lenkpumpe 31 mit Hilfsdruck versehen, der für die Betätigung der Lenkung benötigt wird. Die Differentialsperre 40 erhält Hilfsdruck für das Lüften der Differentialsperre 40 von der Füllpumpe 4. Beim Abschleppvorgang wird dieser Hilfsdruck wie noch geschildert wird, durch die Abschleppschaltung 20 geliefert.

Die Lenkhilfe 30 ist an die Lenkpumpe 31 angeschlossen. Parallel dazu liegt die Lenkhilfe 30 an einer Versorgungsleitung 32. Die Versorgungsleitung 32 enthält eingangsseitig ein unter dem Druck der laufenden Füllpumpe 4 öffnendes Rückschlagventil 33 und stromab davon ein Schaltventil 34. Das Schaltventil 34 ist ein 4/2-Wegeventil, daß durch einen Taster 35 im Anlaßstromkreis betätigbar ist. Weiterhin liegt in der Versorgungsleitung 32 ein Druckbegrenzerventil 36, das der Lenkhilfe 30 vorgeschaltet ist.

Die in üblicher Weise aufgebaute Differentialsperre 40 an den Rädern 1 ist über eine Leitung 41 an die Versorgungsleitung 32 angeschlossen. In der Leitung 41 befindet sich ein Ventil 22c, das einen Teil der Absperrventilanordnung 22 bildet und bei der Betätigung der Absperrventilanordnung 22 mitverstellt wird. In der dargestellten Abschleppstellung der Absperrventilanordnung 22 ist das Ventil 22c geschlossen. In der (nicht dargestellten) Fahrbetriebsstellung der Absperrventilanordnung 22 ist das Ventil 22c geöffnet, so daß der von der Füllpumpe 4 erzeugte Druckmitteldruck über Leitung 41 an die Differentialsperre 40 anlegbar ist. Die Differentialsperre 40 ist dadurch gelöst. Das Ventil 22c wird durch eine Zweigleitung 42 überbrückt, die ein in Fließrichtung zur Differentialsperre 40 öffnendes Rückschlagventil 43 enthält. Das in der Versorgungsleitung 32 liegende Schaltventil 34 ist in seiner ersten Schaltstellung gezeigt, in der es eine Verbindung zwischen der Füllpumpe 4 und der Versorgungsleitung 32 herstellt.

Die Anschlußleitungen 21a und 21b der Abschleppschaltungen sind jeweils über Rückschlagventile 44a bzw. 44b an eine zu der Versorgungsleitung 32 führende Zuleitung 45 und an einen Rücklauf angeschlossen, der über ein Druckbegrenzungsventil 47 zu dem Druckmittelvorratsbehälter 5 führt. Das Druckbegrenzungsventil 47 enthält einen Einlaßanschluß an einen Auslaßanschluß. Der Einlaßanschluß des Druckbegrenzungsventils 47 ist über Leitung 46 mit den Rückschlagventilen 44a, 44b sowie über die Zuleitung 45 mit der Versorgungsleitung 32 verbunden. Der Auslaßanschluß des Druckbegrenzerventils 47 steht mit dem Druckmittelvorratsbehälter 5 in Verbindung.

Der vorstehend beschriebene, als zusätzliche Komponenten zur Feststellbremse 6 die Lenkhilfe 30 und die Differentialsperre 40 enthaltende Fahrantrieb mit der eingeschalteten dargestellten Abschleppschaltung 20 arbeitet wie folgt, wobei wiederum davon ausgegangen wird, daß die Antriebskraftmaschine im Stillstand ist und die Verstellpumpe 3 und die Füllpumpe 4 nicht laufen und daß die Feststellbremse 6 eingefallen ist. Durch das Rückschlagventil 43 in der Zweigleitung 42 und das Rückschlagventil 33 in der Versorgungsleitung 32 in Verbindung mit der gezeigten Stellung des Schaltventils 34 besteht der Lüftdruck an der Differentialsperre 40 weiter. In der eingeschalteten Stellung der Absperrventile 22a und 22b ist die Leitung 41 zur Differentialsperre nämlich durch das Ventil 22c gesperrt.

Wie vorstehend beschrieben wird beim Anschleppen die Feststellbremse 6 über das Rückschlagventil 27a oder das Rückschlagventil 27b (je nach Drehrichtung des Fahrmotors 2) mit Druckmitteldruck beaufschlagt und gelöst. Aus der jeweils druckführenden Anschlußleitung 21a oder 21b wird Druckmitteldruck über das zugehörige Rückschlagventil 44a oder 44b auf die Zuleitung 45 und von da auf die Versorgungsleitung 32 gegeben, die durch das Rückschlagventil 33 zur Füllpumpe 4 hin gesperrt ist. An der Versorgungsleitung 32 steht somit der zum Betrieb der Lenkhilfe 30 und zum Lüften der Differentialsperre 40 erforderliche Hilfsdruck an. Dieser Hilfsdruck wird durch das Druckbegrenzerventil 47 gesichert. Während des Abschleppvorgangs ist daher nicht nur die Feststellbremse gelöst. Es wird auch die Differentialsperre 40 sicher gelöst gehalten. Die Lenkung ist mit der Lenkhilfe 30 betätigbar. Da der Taster 35 des Schaltventils 34 im Anlaßstromkreis liegt und dieser ausgeschaltet ist, bleibt das Schaltventil während des gesamten Abschleppvorgangs in der dargestellten Stellung.

Am Ende des Abschleppvorgangs wird die Absperrventilanordnung 22 umgelegt. Sie befindet sich dann in der Fahrbetriebsstellung, in der die Anschlußleitungen 21a und 21b gesperrt und die Leitung 41 zur Differentialsperre 40 geöffnet ist. Bei Starten der Antriebskraftmaschine laufen die Füllpumpe und die Lenkpumpe 31 wieder an. Unter dem von der Füllpumpe 4 erzeugten Druckmitteldruck öffnen das Rückschlagventil 8 in der Bremsleitung 7 und das Rückschlagventil 32 in der Versorgungsleitung. Im Fahrbetrieb stellt somit die Füllpumpe den zum Lösen der Feststellbremse und zum Lösen der Differentialsperre 40 benötigten Hilfsdruck zur Verfügung. Der Taster 35 des Schaltventils 34 dient dazu, die Differentialsperre 40 im Fahrbetrieb und nur vorübergehend einzuschalten. Bei so einer Betätigung wird das Schaltventil 34 vorübergehend in eine zweite Schaltstellung gebracht, in der die Differentialsperre 40 mit dem Druckmittelvorratsbehälter 5 verbunden ist. Dadurch fällt der Druckmitteldruck in der Leitung 41 ab und die Differentialsperre 40 greift. Die Lenkung wird davon nicht berührt, da die Lenkpumpe 31 die Lenkhilfe 30 weiterhin mit Druckmittel versorgt. Da die Bremsleitung 7 vor dem Schaltventil 34 von der Versorgungsleitung 32 abzweigt, wird auch die Feststellbremse 6 von der Umschaltung des Schaltventils 34 nicht beeinflußt.

**Patentansprüche**

1. Hydrostatischer Fahrantrieb für Fahrzeuge enthaltend

(a) eine von einer Antriebskraftmaschine antreibbare hydraulische Verstellpumpe (3) mit einem ersten und einem zweiten Anschluß,

(b) wenigstens einen hydraulischen Fahrmotor (2) mit einem ersten und einem zweiten Anschluß,

(c) hydraulische Verbindungsleitungen, durch welche der erste Anschluß der Verstellpumpe (3) mit dem ersten Anschluß des Fahrmotors (2) und der zweite Anschluß der Verstellpumpe (3) mit dem zweiten Anschluß des Fahrmotors (2) verbunden ist, so daß von der Verstellpumpe (3), dem Fahrmotor (2) und den Verbindungsleitungen ein Hydraulikkreis gebildet wird und die Verstellpumpe (3) und der Fahrmotor (2) ein hydraulisches Verstellgetriebe zur Übertragung der Antriebsleistung von der Antriebskraftmaschine auf Antriebsglieder (1) des Fahrzeugs bilden,

(d) einen Druckmittelvorratsbehälter (5)

(e) eine zusammen mit der Verstellpumpe (3) antreibbare Füllpumpe (4), mit einem Einlaßanschluß, der mit dem Druckmittelvorratsbehälter (5) in Verbindung steht, und einem Auslaßanschluß,

(f) Mittel zur Verbindung des Auslaßanschlusses der Füllpumpe (4) mit dem Hydraulikkreis,

(g) eine auf die Antriebsglieder (1) wirkende Feststellbremse (6), die durch Druckmitteldruck lösbar ist und bei Wegfall dieses Druckmitteldrucks einfällt,

(h) eine Bremsleitung (7) zwischen dem Auslaßanschluß der Füllpumpe (4) und der Feststellbremse (6),

(i) ein in der Bremsleitung (7) angeordnetes Bremventil (9) mit einer ersten und einer zweiten Schaltstellung, das

(i₁) in seiner ersten Schaltstellung die Bremsleitung (7) freigibt, so daß die Feststellbremse (6) durch Druck der Füllpumpe (4) lösbar ist, und

(i₂) in seiner zweiten Schaltstellung die Bremsleitung (7) absperrt und die Feststellbremse (6) mit dem Druckmittelvorratsbehälter (5) verbindet, so daß die Feststellbremse (6) einfällt, und

(j) Mittel zum Erzeugen eines Druckmitteldrucks an der Feststellbremse (6) unabhängig von der Füllpumpe (4), so daß bei Stillstand der Antriebskraftmaschine und Wegfall des Drucks der Füllpumpe (4) ein Lösen der Feststellbremse (6) beim Abschleppen des Fahrzeugs möglich ist,

dadurch gekennzeichnet, daß

(k) als Mittel zum Erzeugen eines Druckmitteldrucks an der Feststellbremse (6) eine zu dem hydraulischen Fahrmotor (2) über Anschlußleitungen (21a, 21b) parallel angeordnete Abschleppschaltung (20) vorgesehen ist, welche

(k₁) eine Absperrventilanordnung (22) zum Trennen der Abschleppschaltung (20) von den Anschlüssen des Fahrmotors (2) enthält sowie

(k₂) einen zwischen den Anschlüssen des Fahrmotors (2) sich erstreckenden Hydraulikkreis mit druckbegrenzenden Mitteln (28a bzw. 28b), die einen Einlaß- und Auslaßanschluß aufweisen und

(k₃) eine Verbindung (26, 27a bzw. 27b) zwischen einem Anschluß des Fahrmotors (2) und der Feststellbremse (6), derart, daß ein beim Abschleppen des Fahrzeugs an dem Anschluß des Fahrmotors (2) vor den druckbegrenzenden Mitteln (28a bzw. 28b) durch den dann als Pumpe wirkenden Fahrmotor (2) erzeugter Druckmitteldruck ein Lösen der Feststellbremse (6) bewirkt.

2. Fahrantrieb nach Anspruch 1, dadurch gekennzeichnet, daß die Abschleppschaltung (20) weiterhin eine Verbindung (24a bzw. 24b, 25) zwischen dem anderen Anschluß des Fahrmotors (2) und dem Druckmittelvorratsbehälter (5) unter Umgehung der Füllpumpe (4) enthält.

3. Fahrantrieb nach Anspruch 1, dadurch gekennzeichnet, daß

(a) die Absperrventilanordnung (22) zwei gemeinsam betätigbare Absperrventile (22a, 22b) enthält, von denen je eines in jeder der Anschlußleitungen (21a, 21b) angeordnet ist, so daß die beiden Anschlußleitungen gemeinsam absperrbar oder freigebbar sind,

(b) die Abschleppschaltung (20) ein erstes Paar von Rückschlagventilen (24a, 24b) enthält, die zwischen je einer der Anschlußleitungen (21a, 21b) und dem Druckmittelvorratsbehälter (5) angeordnet sind und von denen jedes in Richtung von dem Druckmittelvorratsbehälter (5) zu der zugehörigen Anschlußleitung (21a, 21b) hin öffnet, und

(c) die Abschleppschaltung (20) ein zweites Paar von Rückschlagventilen (27a, 27b) enthält, die zwischen je einer der Anschlußleitungen (21a, 21b) und der Bremsleitung (7) angeordnet sind und von denen jedes in Richtung von der zugehörigen Anschlußleitung (21a, 21b) zu der Bremsleitung (7) hin öffnet.

4. Fahrantrieb nach Anspruch 3, dadurch gekennzeichnet, daß

(a) die Abschleppschaltung (20) weiterhin als druckbegrenzende Mittel zwei Druckbegrenzer (28a, 28b) mit je einem Einlaßanschluß und einem Auslaßanschluß aufweist,

(b) die Einlaßanschlüsse der Druckbegrenzer (28a, 28b) mit je einer der Anschlußleitungen (21a, 21b) verbunden sind,

(c) der Auslaßanschluß jedes Druckbegrenzers (28a, 28b), dessen Einlaßanschluß mit einer Anschlußleitung (21a, 21b) verbunden ist, über ein Rückschlagventil (29a, 29b) mit der jweils anderen Anschlußleitung (21b, 21a) in Verbindung steht, das in Richtung auf diese andere Anschlußleitung (21b, 21a) öffnet.

5. Fahrantrieb nach Anspruch 3, dadurch gekennzeichnet, daß zwischen der Bremsleitung (7), und dem Auslaßanschluß der Füllpumpe (4) ein Rückschlagventil (8) angeordnet ist, das in Richtung auf die Bremsleitung (7) hin öffnet.

6. Fahrantrieb nach Anspruch 4, gekennzeichnet durch

(a) eine hydraulische Lenkhilfe (30), die von einer durch die Antriebskraftmaschine antreibbaren Lenkpumpe (31) gespeist ist,

(b) einen weiteren Druckbegrenzer (47) mit einem Einlaßanschluß und einem Auslaßanschluß, dessen Auslaßanschluß mit dem Druckmittelvorratsbehälter (5) und dessen Einlaßanschluß mit der Lenkhilfe verbunden ist,

(c) je ein Rückschlagventil (44a, 44b) zwischen jeder der Anschlußleitungen (21a, 21b) und dem Einlaßanschluß des weiteren Druckbegrenzers (47), die in Richtung auf diesen Einlaßanschluß öffnen.

7. Fahrantrieb nach Anspruch 4, dadurch gekennzeichnet, daß

(a) eine Differentialsperre (40) vorgesehen ist, die durch Druckbeaufschlagung ausrückbar ist,

(b) die Differentialsperre (40) mit dem Auslaßanschluß der Füllpumpe (4) über ein Rückschlagventil (33) verbunden ist, das in Richtung auf die Differentialsperre (40) öffnet,

(c) ein Ventil (34) vorgesehen ist, durch welches die Differentialsperre (40) stromab von dem Rückschlagventil (33) wahlweise mit dem Druckmittelvorratsbehälter (5) verbindbar ist,

(d) ein weiterer Druckbegrenzer (47) mit einem Einlaßanschluß und einem Auslaßanschluß vorgesehen ist, dessen Auslaßanschluß mit dem Druckmittelvorratsbehälter (5) und dessen Einlaßanschluß mit der Differentialsperre (40) stromab von dem Rückschlagventil (33) in Verbindung steht, und

(e) je ein Rückschlagventil (44a, 44b) zwischen jeder der Anschlußleitungen (21a, 21b) und dem Einlaßanschluß des weiteren Druckbegrenzers (47) liegt und in Richtung auf diesen Einlaßanschluß öffnet.

8. Fahrantrieb nach Anspruch 7, dadurch gekennzeichnet, daß

(a) die Absperrventilanordnung (22) ein weiteres Absperrventil (22c) enthält, das gemeinsam mit den beiden anderen Absperrventilen (22a, 22b) betätigbar ist und abgesperrt ist, wenn die beiden anderen Absperrventile (22a, 22b) offen sind, und umgekehrt,

(b) das weitere Absperrventil (22c) zwischen dem Einlaßanschluß des weiteren Druckbegrenzers (47) und der Differentialsperre (40) sitzt und

(c) das weitere Absperrventil (22c) durch eine Zweigleitung (42) mit einem in Richtung auf die Differentialsperre (40) öffnenden Rückschlagventil (43) überbrückt ist.

## Claims

1. Hydrostatic travelling drive system for vehicles, comprising

(a) a hydraulic variable displacement pump (3) having first and second ports and arranged to be driven by a prime mover,

(b) at least one hydraulic travel motor (2) having first and second ports,

(c) hydraulic connecting conduits by which said first port of the variable displacement pump (3) is connected with the first port of the travel motor (2) and by which the second port of the variable displacement pump (3) is connected with the second port of the travel motor (2), whereby a hydraulic circuit is formed by the variable displacement pump (3), the travel motor (2) and the connecting conduits and whereby the variable displacement pump (3) and the travel motor (2) form a variable hydraulic transmission for transmitting the driving power from the prime mover to drive members (1) of the vehicle,

(d) a fluid reservoir (5),

(e) a flling pump (4) arranged to be driven together with the variable displacement pump (3) and having an inlet port, which communicates with said fluid reservoir (5), and an outlet port,

(f) means for communicating the outlet port of the filling pump (4) with said hydraulic circuit,

(g) a parking brake (6) acting on said drive members (1) and arranged to be relaesed by fluid pressure and to be applied, when this fluid pressure is removed,

(h) a brake conduit (7) between the outlet port of the filling pump (4) and the parking brake (6),

(i) a brake valve (9) arranged in that brake conduit (7) and having first and second valve positions, which brake valve means,

(i₁) in its first valve position, permits fluid flow through the brake conduit (7), whereby the parking brake (6) can be released by pressure from the filling pump, and

(i₂) in its second valve position shuts-off the brake conduit (7) and connects the parking brake (6) to the fluid reservoir (5), whereby said parking brake (6) is applied, and

(j) means for generating a fluid pressure in the parking brake (6) independently of the filling pump (4) to permit the parking brake (6) to be released while the vehicle is being towed, when the prime mover fails and the pressure from the filling pumpt (4) is removed,

characterized in that

(k) as means for generating a fluid pressure in the parking brake (6) a towing circuit (20) is provided, which is connected in parallel to said hydraulic travel motor (2) through connecting conduits (21a, 21b), and comprising

(k₁) shut-off valve means (22) for separating the towing circuit (20) from the ports of the travel motor (2),

(k₂) a hydraulic circuit, which extends between the ports of the travel motor (2) and includes pressure limiting means (28a and 28b, respectively), which have inlet and outlet ports, and

(k₃) communication means (26, 27a and 27b, respectively) between one port of the travel motor (2) and the parking brake (6) such that the fluid pressure, which is generated by the travel motor (2) then acting as pump, upstream of the pressure limiting means (28a and 28b, respectively), causes the parking brake (6) to be released, when the vehicle is being towed.

2. Travelling drive system as claimed in claim 1, characterized in that the towing circuit (20) additionally comprises a · communication (24a and 24b, respectively, 25) between the other port of the travel motor (2) and the fluid reservoir (5) bypassing the filling pump (4).

3. Travelling drive system as claimed in claim 1, characterized in that

(a) the shut-off valve means (22) comprises two shut-off valves (22a, 22b) arranged to be actuated jointly, one of the shut-off valves (22a, 22b) being arranged in each of said connecting conduits (21a, 21b), whereby the two connecting conduits can be shut-off or opened jointly,

(b) the towing circuit (20) comprises a first pair of check valves (24a, 24b), which are arranged between one of the connecting conduits (21a, 21b) each and the fluid reservoir

## 0 085 272

(5), and each of which is arranged to open in the direction from the fluid reservoir (5) towards the associated connecting conduit (21a, 21b), and

(c) the towing circuit (20) comprises a second pair of check valves (27a, 27b), which are arranged between one of the connecting conduits (21a, 21b) each and the brake conduit (6), and each of which is arranged to open in the direction from the associated connecting conduit (21a, 21b) towards the braking conduit (7).

4. Travelling drive system as claimed in claim 3, characterized in that

(a) the towing circuit (20) further comprises two pressure relief valves (28a, 28b) as pressure limiting means, each of said pressure relief valves having an inlet port and an outlet port,

(b) the inlet ports of the pressure relief valves (28a, 28b) are connected to one of the connecting conduits (21a, 21b) each,

(c) the outlet port of each pressure relief valve (28a, 28b) the inlet port of which is connected to one connecting conduit (21a, 21b) communicates with the respective other connecting conduit (21b, 21a) through a check valve (29a, 29b), which opens in the direction towards said other connecting conduit (21b, 21a).

5. Travelling drive system as claimed in claim 3, characterized in that a check valve (8) is arranged between the brake conduit (7) and the outlet port of the filling pump (4), said check valve opening in the direction towards said brake conduit (7).

6. Travelling drive system as claimed in claim 4, characterized by

(a) a hydraulic steering booster (30) which is supplied with hydraulic fluid from a steering pump (31) arranged to be driven by the prime mover,

(b) a further pressure relief valve (47) having an inlet port and an outlet port, said outlet port communicating with the fluid reservoir and the inlet port being connected with said steering booster,

(c) one check valve (44a, 44b) between each of the connecting conduits (21a, 21b) and the inlet port of the further pressure relief valve (47), said check valves being arranged to open in the direction towards this inlet port.

7. Travelling drive system as claimed in claim 4, characterized in that

(a) differential gear locking means (40) are provided and are arranged to be disengaged by exposure to fluid pressure,

(b) the differential gear locking means (40) being connected with the outlet port of the filling pump (4) through a check valve (33) which is arranged to open in the direction towards the differential gear locking means (40),

(c) a valve (34) is arranged to optionally connect the differential gear locking means (40) downstream of the check valve (33) to the fluid reservoir (5),

(d) a further pressure relief valve (47) having an inlet port and an outlet port is provided, said outlet port communicating with the fluid reservoir (5) and said inlet port communicating with the differential gear locking means (40) downtream of the check valve (33), and

(e) one check valve (44a, 44b) each is connected between each of the connecting conduits (21a, 21b) and the inlet port of the further pressure relief valve (47) and is arranged to open in the direction towards this inlet port.

8. Travelling drive system as claimed in claim 7, characterized in that

(a) the shut-off valve means (22) comprises a further shut-off valve (22c) which is arranged to be actuated jointly with the other two shut-off valves (22a, 22b) and which is shut-off, when the twi other shut-off valves are open and vice versa,

(b) the further shut-off valve (22c) is connected between said inlet port of the further pressure relief valve (47) and the differential gear locking means (40), and

(c) the further shut-off valve (22c) is bypassed by a bypass conduit (42) including a check valve (43), which is arranged to open in the direction towards the differential gear locking means (40).

**Revendications**

1. Propulsion de roulement hydrostatique pour des véhicules comprenant

(a) une pompe hydraulique à réglage de débit (3) qui peut être commandée par une machine motrice et qui est munie d'un premier und d'un deuxième raccord,

(b) au moins un moteur de roulement hydraulique (2) muni d'un premier et d'un deuxième raccord,

(c) des conduites de raccordement hydrauliques, par l'intermédiaire desquelles le premier raccord de la pompe à réglage de débit (3) est relié au premier raccord du moteur de roulement (2), et le deuxième raccord de la pompe à réglage de débit (3) est relié au deuxième raccord du moteur de roulement (2), de sorte qu'un circuit hydraulique est formé par la pompe à réglage de débit (3), le moteur de roulement (2) et les conduites de raccordement, et que la pompe à réglage de débit (3) et le moteur de roulement (2) for-

9

ment une transmission variable pour la transmission de la puissance de commande depuis la machine motrice aux éléments de commande (1) du véhicule,

(d) un réservoir de fluide (5)

(e) une pompe de remplissage (4) qui peut être commandée conjointement avec la pompe à réglage de débit (3), et qui est munie d'un raccord d'entrée relié au réservoir de fluide (5), et d'un raccord de sortie,

(f) des moyens pour relier le raccord de sortie de la pompe de remplissage (4) au circuit hydraulique,

(g) un frein de parcage (6) agissant sur les élément de commande (1), qui peut être desserré par la pression de fluide et qui est appliqué en cas de suppression de ce fluide,

(h) un tuyau de frein (7) entre le raccord de sortie de la pompe de remplissage (4) et le frein de parcage (6),

(i) une soupape de freinage (3) disposée dans le tuyau de frein (7), avec une première et une deuxième position de soupape, qui

($i_1$) dans sa première position de soupape, ouvre le tuyau de frein (7), de sorte que le frein de parcage (6) peut être desserré par la pression de la pompe de remplissage (4),

($i_2$) et qui dans sa deuxième position de soupape, ferme le tuyau de frein (7), et elle relie le frein de parcage (6) au réservoir de fluide (5), de sorte que le frein de parcage est appliqué, et

(j) des moyens pour engendrer une pression de fluide au frein de parcage, indépendament de la pompe de remplissage (4), de sorte qu'en cas d'arrêt de la machine motrice et de suppression de la pression de la pompe de remplissage (4), il est possible de desserrer le frein de parcage (6) lors du remorquage du véhicule,

caractérisé par le fait

(k) que comme moyen pour engendrer une pression de fluide au frein de parcage (6), est prévu un circuit de remorquage (20) disposé de manière parallèle au moteur de roulement hydraulique (2) par l'intermédiaire de conduites de raccord (21a, 21b), et qui comprend

($k_1$) une disposition de soupapes d'isolement destinée à isoler le circuit de remorquage (20) des raccords du moteur de roulement (2), ainsi que

($k_2$) un circuit hydraulique qui s'étend entre les raccords du moteur de roulement (2), et qui est muni de moyens limitant la pression (28a et 28b, respectivement), et présentant un raccord d'entrée et de sortie, et

($k_3$) une connexion (26, 27a et 27b, respectivement) entre un raccord du moteur de roulement (2) et le frein de parcage (6) de sorte qu'une pression de fluide engendrée lors du remorquage du véhicule au raccord du moteur de roulement (2) devant les moyens limitant la pression (28a et 28b, respectivement), par le moteur de roulement (2) agissant alors comme pompe, provoque le desserrage du frein de parcage (6).

2. Propulsion de roulement selon la revendication 1, caractérisée par le fait que le circuit de remorquage (20) comprend, en outre, une connexion (24a et 24b, respectivement; 25) entre l'autre raccord du moteur de roulement (2) et le réservoir de fluide (5) en contournant la pompe de remplissage (4).

3. Propulsion de roulement selon la revendication 1, caractérisée par le fait que

(a) la disposition de soupape d'isolement (22) comprend deux soupapes d'isolement (22a, 22b) qui peuvent être actionnées conjointement, et dont l'une à la fois est disposée dans chacune des conduites de raccord (21a, 21b) de sorte que les deux conduites de raccord peuvent être conjointement fermées et ouvertes,

(b) le circuit de remorquage (20) comprend une première paire de clapets anti-retour (24a, 24b) qui sont disposés chacun entre l'une des conduites de raccord (21a, 21b) et le réservoir de fluide (5), et dont chacun ouvre en direction du réservoir de fluide (5) vers la contuide de raccord correspondante (21a, 21b), et

(c) le circuit de remorquage (20) comprend une deuxième paire de clapets anti-retour (27a, 27b) qui sont disposés chacun entre l'une des conduites de raccord (21a, 21b) et le tuyau de frein (7), et dont chacun ouvre en direction de la conduite de raccord correspondante (21a, 21b) vers le tuyau de frein (7).

4. Propulsion de roulement selon la revendication 3, charactérusée par le fait que

(a) le circuit de remorquage (20) comprend, en outre, comme moyens limitant la pression, deux limiteurs de pression (28a, 28b) chacun muni d'un raccord d'entrée et d'un raccord de sortie,

(b) les raccords d'entrée des limiteurs de pression (28a, 28b) sont chacun reliés à l'une des conduites de raccord (21a, 21b),

(c) le raccord de sortie de chaque limiteur de pression (28a, 28b) dont le raccord d'entrée est relié à une conduite de raccord (21a, 21b) est relié à l'autre conduite de raccord (21b, 21a), par l'intermédiaire d'un clapet anti-retour (29a, 29b), qui ouvre en direction de cette autre conduite de raccord (21b, 21a).

5. Propulsion de roulement selon la revendication 3, caractérisée par le fait qu'entre le tuyau de frein (7) et le raccord de sortie de la pompe de remplissage (4) est disposé un clapet anti-retour (8) qui ouvre en direction du tuyau de frein (7).

6. Propulsion de roulement selon la revendication 4, caractérisée par

(a) une servo-direction (30) qui est alimentée par une pompe de direction (31) commandée par la machine motrice,

(b) un autre limiteur de pression (47) muni d'un raccord d'entrée et d'un raccord de sortie, dont le raccord de sortie est relié au réservoir de fluide (5) et dont le raccord d'entrée est relié à la servo-direction,

(c) un clapet anti-retour (44a, 44b) entre chaque conduite de raccord (21a, 21b) et le raccord d'entrée de l'autre limiteur de pression (47), les clapets anti-retour ouvrant en direction de ce raccord d'entrée.

7. Propulsion de roulement selon la revendication 4, caractérisée par le fait que

(a) un verrouillage du différentiel (40) est prévu, ce verrouillage étange désengagé en l'exposant à pression,

(b) le verrouillage du différentiel (40) est relié au raccord de sortie de la pompe de remplissage (4) par l'intermédiaire d'un clapet anti-retour (33) qui ouvre en direction du verrouillage du différentiel (40),

(c) une soupape (34) est prévue, par l'intermédiaire de cette soupape le verrouillage du différentiel (40) étant facultativement relié, en aval du clapet anti-retour (33), au réservoir de fluide (5),

(d) un autre limiteur de pression (47) muni d'un raccord d'entrée et d'un raccord de sortie est prévu, le raccord de sortie étant relié au réservoir de fluide (5) et le raccord d'entrée étant relié au verrouillage du différentiel (40) en aval du clapet anti-retour (33), et

(e) un clapet anti-retour (44a, 44b) à la fois est situé entre chacune des conduites de raccord (21a, 21b) et le raccord d'entrée de l'autre limiteur de pression (48), et il ouvre en direction de ce raccord d'entrée.

8. Propulsion de roulement selon la revendication 7, caractérisée par le fait que

(a) la disposition de soupape d'isolement (22) comprend une autre soupape d'isolement (22c) qui peut être actionnée conjointement avec les deux autres soupapes d'isolement (22a, 22b), et qui est fermée lorsque les deux autres soupapes d'isolement (22a, 22b) sont ouvertes, et inversement,

(b) l'autre soupape d'isolement (22c) est située entre le raccord d'entrée de l'autre limiteur de pression (47) et le verrouillage du différentiel (40), et

(c) l'autre soupape d'isolement (22c) est contournée par une conduite de branchement (42) munie d'un clapet anti-retour (43) qui ouvre en direction du verrouillage du différentiel (40).

0 085 272